# EUROPÄISCHE PATENTANMELDUNG

(11) **EP 4 578 815 A1**
(43) Veröffentlichungstag der Anmeldung: **02.07.2025**
(21) Anmeldenummer: 24211357.9
(22) Anmeldetag: 07.11.2024
(51) Int. Cl.: B66F 9/06, B66F 9/075, G05D 1/667

(54) **VORRICHTUNG, VERFAHREN UND SYSTEM ZUM BETREIBEN EINES FLURFÖRDERZEUGS IN EINEM WARENLAGER**

(30) Priorität: 27.12.2023 DE 102023136722; 17.06.2024 DE 102024116933
(71) Anmelder: STILL GmbH, 22113 Hamburg (DE)
(72) Erfinder: Herzfeld, Jonas, 22083 Hamburg (DE); Haase, Matthias, 20259 Hamburg (DE); Viereck, Volker, 23898 Kühsen (DE)
(74) Vertreter: Patentship Patentanwaltgesellschaft

(57) **Zusammenfassung**

Die Erfindung betrifft eine Datenverarbeitungsvorrichtung bzw. Steuereinheit (123) zum Betreiben eines Flurförderzeugs (120a) zum Transport eines Ladungsträgers (141) in einem Warenlager. Die Datenverarbeitungsvorrichtung (123) umfasst eine Schnittstelle (123b), welche ausgebildet ist, eine Vielzahl von Sensordaten, insbesondere Bildern, des Ladungsträgers (141) bei der Bewegung des Flurförderzeugs (120a) relativ zu dem Ladungsträger (141) zu erhalten, sowie eine Prozessoreinrichtung (123a), welche ausgebildet ist, auf der Grundlage der Vielzahl von Sensordaten, insbesondere Bildern, eine mehrdimensionale probabilistische Belegungskarte einer Umgebung des Flurförderzeugs (120a) zu generieren und/oder zu aktualisieren, wobei die mehrdimensionale probabilistische Belegungskarte eine Vielzahl von mehrdimensionalen Zellen umfasst und wobei jede mehrdimensionale Zelle mit einer Belegungswahrscheinlichkeit verknüpft ist. Die Prozessoreinrichtung (123a) ist ferner ausgebildet, auf der Grundlage der mehrdimensionalen probabilistischen Belegungskarte der Umgebung des Flurförderzeugs (120a) wenigstens eine zweidimensionale Ansicht des Ladungsträgers (141) zu erstellen und mittels eines Objekterkennungsmechanismus auf der Grundlage der wenigstens einen zweidimensionalen Ansicht des Ladungsträgers (141) den Ladungsträger (141) zu erkennen und Steuersignale für das Flurförderzeug (120a) zu erzeugen, um das Flurförderzeug (120a) relativ zu dem erkannten Ladungsträger (141) zu bewegen und den erkannten Ladungsträger (141) aufzunehmen. Die Datenverarbeitungsvorrichtung bzw. Steuereinheit (123) kann Teil des Flurförderzeugs (120a) sein.

## Beschreibung

Die Erfindung betrifft eine Vorrichtung, ein Verfahren und ein System zum Betreiben eines Flurförderzeugs, insbesondere eines Gabelstaplers, in einem Warenlager.

Für den Transport und die Lagerung von Produkten, Waren und Materialien werden oftmals Ladungsträger, beispielsweise Gitterboxen oder Paletten, insbesondere Europaletten, verwendet. Zur Handhabung derartiger Ladungsträger, z.B. in der Intralogistik, d.h. dem innerbetrieblichen Materialfluss, z.B. in einem Warenlager, werden Flurförderzeuge, z.B. Gabelstapler und dergleichen eingesetzt. Ein Warenlager ist in der Regel ein sehr dynamisches Umfeld, in dem die Steuerung der mobilen Flurförderzeuge in der Regel entweder manuell, teilautomatisiert oder automatisiert erfolgt.

Moderne Flurförderzeuge sind häufig mit Sensoreinheiten, beispielsweise Kameras ausgestattet, welche ausgebildet sind, die Umgebung eines jeweiligen Flurförderzeugs zu erfassen, so dass auf der Grundlage der erfassten Sensordaten das Flurförderzeug gesteuert werden kann, insbesondere im autonomen bzw. automatisierten oder teilautomatisierten Betrieb. Zur Detektion eines externen Objektes (hierin auch als Objekterkennung bezeichnet), beispielsweise eines Ladungsträgers, muss ein herkömmliches Flurförderzeug üblicherweise an einer vorbestimmten Stelle positioniert werden, beispielsweise an einer vorbestimmten Stelle vor einer Aufnahme- und/oder Abladestation. Da üblicherweise keine globalen Positionsinformationen verwendet werden, wird dabei die erwartete Position, beispielsweise eines Ladungsträgers mit Koordinateninformationen im Koordinatensystem der Kamera verwendet. Dies bedeutet, dass nur dann, wenn sich das Flurförderzug und somit die Kamera, an der richtigen Stelle befindet, kann die Objekterkennung, beispielsweise eines Ladungsträgers erfolgreich durchgeführt werden.

Dies hat zum einen den Nachteil, dass die Objekterkennung nur durchgeführt werden kann, wenn sich die Kamera nicht bewegt, d.h. stationär ist und an der richtigen Stelle befindet. Falls sich ein Ladungsträger nicht an einer Sollposition befindet, d.h. dessen Position gegenüber der Sollposition verschoben und/oder verdreht ist, so dass die Bewegung des Flurförderzeugs korrigiert werden muss, um den Ladungsträger aufzunehmen, kann dies erst nach einer erfolgten Anfahrt des Flurförderzeugs bestimmt werden, was eine zeitaufwändige Positionskorrektur des Flurförderzeugs erforderlich machen kann. Ferner kann ein Objekt, beispielsweise ein Ladungsträger nur von der Vorderseite erfasst werden, d.h. das Blickfeld der Kamera des Flurförderzeugs ist beschränkt. Bei verrauschten oder invaliden Messungen kann dies zu falschen oder keinen Ergebnissen bei der Objekterkennung führen. Ferner können bei bestimmten Blickwinkeln der Kamera des Flurförderzugs Reflektionen, schlechte Lichtverhältnisse und/oder andere Rauschquellen eine korrekte Erfassung durch eine Kamera erschweren oder unmöglich machen.

Vor diesem Hintergrund liegt der vorliegenden Erfindung die Aufgabe zu Grunde, eine verbesserte Vorrichtung sowie ein verbessertes Verfahren und System zum Betreiben eines Flurförderzeugs in einem Warenlager bereit zu stellen.

Diese Aufgabe wird gemäß einem ersten Aspekt durch eine Datenverarbeitungsvorrichtung zum Betreiben eines Flurförderzeugs zum Transport eines Ladungsträgers in einem Warenlager gelöst. In einer Ausführungsform ist das Flurförderzeug als Gabelstapler ausgebildet, der zumindest teilautomatisiert betrieben werden kann. Gemäß einer Ausführungsform kann die Datenerarbeitungsvorrichtung in Form einer Steuereinheit Teil des Flurförderzugs, insbesondere Gabelstaplers sein. Gemäß einer weiteren Ausführungsform kann die Datenerarbeitungsvorrichtung als zentrale Vorrichtung, insbesondere Server zum Betreiben einer Vielzahl von Flurförderzeugen in einem Warenlager sein.

Die Datenverarbeitungsvorrichtung gemäß dem ersten Aspekt umfasst eine Schnittstelle, welche ausgebildet ist, eine Vielzahl von Sensordaten, insbesondere Bilddaten, des Ladungsträgers bei der Bewegung des Flurförderzeugs relativ zu dem Ladungsträger, d.h. aus unterschiedlichen Positionen des Flurförderzeugs relativ zu dem Ladungsträger zu erhalten. Ferner umfasst die Datenverarbeitungsvorrichtung gemäß dem ersten Aspekt eine Prozessoreinrichtung, welche ausgebildet ist, auf der Grundlage der Vielzahl von Sensordaten, insbesondere Bilddaten, eine mehrdimensionale, insbesondere dreidimensionale, probabilistische Belegungskarte (im Englischen als "probabilistic occupancy map" bekannt) einer Umgebung des Flurförderzeugs zu generieren und/oder zu aktualisieren, wobei die mehrdimensionale, insbesondere dreidimensionale, probabilistische Belegungskarte eine Vielzahl von mehrdimensionalen, insbesondere dreidimensionalen, Zellen umfasst und wobei jede mehrdimensionale, insbesondere dreidimensionale Zelle, mit einer Belegungswahrscheinlichkeit verknüpft ist. Die Prozessoreinrichtung ist ferner ausgebildet, auf der Grundlage der mehrdimensionalen, insbesondere dreidimensionalen, probabilistischen Belegungskarte der Umgebung des Flurförderzeugs wenigstens eine zweidimensionale Ansicht, d.h. ein zweidimensionales Bild des Ladungsträgers zu erstellen und mittels eines Objekterkennungsmechanismus auf der Grundlage der wenigstens einen zweidimensionalen Ansicht des Ladungsträgers den Ladungsträger zu erkennen und Steuersignale für das Flurförderzeug zu erzeugen, um das Flurförderzeug relativ zu dem erkannten Ladungsträger zu bewegen und den erkannten Ladungsträger aufzunehmen. Dadurch kann der Ladungsträger während einer Bewegung des Flurförderzeugs relativ zu dem Ladungsträger, insbesondere bei einer Anfahrt des Flurförderzeugs auf den Ladungsträger, effizient erfasst werden. Ferner kann die Bewegung des Flurförderzeugs, insbesondere die Anfahrt des Flurförderzeugs, angepasst werden, um den Ladungsträger effizient, beispielsweise mit möglichst wenig Korrekturmanövern, aufzunehmen.

In einer Ausführungsform ist die Prozessoreinrichtung ausgebildet, auf der Grundlage der mehrdimensionalen, insbesondere dreidimensionalen, probabilistischen Belegungskarte der Umgebung des Flurförderzeugs die wenigstens eine zweidimensionale Ansicht des Ladungsträgers relativ zu einer virtuellen Sensorposition, d.h. relativ zu einem vordefinierten Referenzpunkt zu erstellen. Dadurch kann bereits eine geeignete Ansicht zur Aufnahme des Ladungsträgers vorbestimmt sein.

Gemäß einer Ausführungsform kann der Objekterkennungsmechanismus ein künstliches neuronales Netzwerk zur Objekterkennung umfassen, welches ausgebildet ist, auf der Grundlage der wenigstens einen zweidimensionalen Ansicht des Ladungsträgers den Ladungsträger zu erkennen. Dadurch kann der Ladungsträger effizient, insbesondere in unterschiedlichen Umgebungen, erkannt werden.

In einer Ausführungsform ist die Prozessoreinrichtung ausgebildet, auf der Grundlage der Vielzahl von Sensordaten, insbesondere Bilddaten, die mehrdimensionale, insbesondere dreidimensionale, probabilistische Belegungskarte der Umgebung des Flurförderzeugs zu generieren und/oder zu aktualisieren, indem auf der Grundlage der Vielzahl von Sensordaten, insbesondere Bilddaten, die Belegungswahrscheinlichkeit wenigstens einer Zelle der Vielzahl von mehrdimensionalen, insbesondere dreidimensionalen, Zellen bestimmt und/oder geändert wird. Dadurch kann die Umgebung des Flurförderzeugs effizient verarbeitet werden, um die zweidimensionale Ansicht des Ladungsträgers zu erstellen.

Gemäß einem zweiten Aspekt wird die vorstehend genannte Aufgabe durch ein Flurförderzeug, insbesondere einen Gabelstapler, zum Transport eines Ladungsträgers in einem Warenlager gelöst, wobei das Flurförderzeug eine Datenverarbeitungsvorrichtung gemäß dem ersten Aspekt umfasst. Dadurch kann ein effizient steuerbares, insbesondere automatisch steuerbares, Flurförderzeug bereitgestellt werden.

In einer Ausführungsform kann das Flurförderzeug ferner Antriebsmittel umfassen, welche ausgebildet sind, das Flurförderzeug auf der Grundlage der Steuersignale relativ zu dem Ladungsträger zu bewegen. Dadurch kann das Flurförderzeug basierend auf den Steuersignalen automatisch bewegt werden.

Gemäß einer Ausführungsform kann das Flurförderzeug ferner Lastaufnahmemittel, insbesondere Lastgabeln, umfassen, wobei die Lastaufnahmemittel, insbesondere Lastgabeln, ausgebildet sind, auf der Grundlage der Steuersignale relativ zu dem Ladungsträger bewegt zu werden, um den Ladungsträger aufzunehmen. Dadurch kann das Flurförderzeug basierend auf den Steuersignalen den Ladungsträger automatisch aufnehmen.

In einer Ausführungsform umfasst das Flurförderzeug ferner eine Sensoreinheit, insbesondere eine Bilderfassungseinheit, wobei die Sensoreinheit, insbesondere Bilderfassungseinheit, ausgebildet ist, die Vielzahl von Sensordaten, insbesondere Bilddaten, des Ladungsträgers bei der Bewegung des Flurförderzeugs relativ zu dem Ladungsträger zu erfassen und der Schnittstelle der Datenverarbeitungsvorrichtung gemäß dem ersten Aspekt bereitzustellen. Dadurch kann der Ladungsträger effizient erfasst und die Vielzahl von Sensordaten, insbesondere Bilddaten, des Ladungsträgers effizient der Datenverarbeitungsvorrichtung bereitgestellt werden.

Gemäß einem dritten Aspekt wird die vorstehend genannte Aufgabe durch ein System zum Betreiben einer Vielzahl von Flurförderzeugen in einem Warenlager gelöst, wobei das System gemäß dem dritten Aspekt eine Vielzahl von Flurförderzeugen gemäß dem zweiten Aspekt umfasst sowie eine Datenverarbeitungsvorrichtung gemäß dem ersten Aspekt zum Betreiben der Vielzahl von Flurförderzeugen in dem Warenlager. Dadurch kann ein effizientes System mit einer Vielzahl von Flurförderzeugen zur Erfassung und Aufnahme von Ladungsträgern bereitgestellt werden.

Gemäß einem vierten Aspekt wird die vorstehend genannte Aufgabe durch ein Verfahren zum Betreiben eines Flurförderzeugs zum Transport eines Ladungsträgers in einem Warenlager gelöst. Dabei umfasst das Verfahren gemäß dem vierten Aspekt die folgenden Schritte:
Erhalten einer Vielzahl von Sensordaten, insbesondere Bilddaten, des Ladungsträgers bei der Bewegung des Flurförderzeugs relativ zu dem Ladungsträger;
Generieren und/oder Aktualisieren einer mehrdimensionalen, insbesondere dreidimensionalen, probabilistischen Belegungskarte einer Umgebung des Flurförderzeugs bzw. Ladungsträgers auf der Grundlage der Vielzahl von Sensordaten, insbesondere Bilddaten, wobei die mehrdimensionale, insbesondere dreidimensionale, probabilistische Belegungskarte eine Vielzahl von mehrdimensionalen, insbesondere dreidimensionalen, Zellen umfasst und wobei jede mehrdimensionale, insbesondere dreidimensionale, Zelle mit einer Belegungswahrscheinlichkeit verknüpft ist;
Erstellen wenigstens einer zweidimensionalen Ansicht des Ladungsträgers auf der Grundlage der mehrdimensionalen, insbesondere dreidimensionalen, probabilistischen Belegungskarte, um mittels eines Objekterkennungsmechanismus auf der Grundlage der wenigstens einen zweidimensionalen Ansicht des Ladungsträgers den Ladungsträger zu erkennen und Steuersignale für das Flurförderzeug zu erzeugen, um das Flurförderzeug relativ zu dem erkannten Ladungsträger zu bewegen und den erkannten Ladungsträger aufzunehmen.

Dadurch kann der Ladungsträger während einer Bewegung des Flurförderzeugs relativ zu dem Ladungsträger, insbesondere bei einer Anfahrt des Flurförderzeugs auf den Ladungsträger, effizient erfasst werden. Ferner kann die Bewegung des Flurförderzeugs, insbesondere die Anfahrt des Flurförderzeugs, angepasst werden, um den Ladungsträger effizient, beispielsweise mit möglichst wenig Korrekturmanövern, aufzunehmen.

Das Verfahren gemäß dem vierten Aspekt kann mittels der Datenverarbeitungsvorrichtung gemäß dem ersten Aspekt durchgeführt werden. Daher ergeben sich weitere Ausführungsformen des Verfahrens gemäß dem vierten Aspekt aus den vorstehend und nachstehend beschriebenen Ausführungsformen der Datenverarbeitungsvorrichtung gemäß dem ersten Aspekt.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines Flurförderzeugs zum Transport von Waren in einem Warenlager gemäß einer Ausführungsform;
Figur 2 eine schematische Darstellung eines erfindungsgemäßen Systems mit einer Vielzahl von Flurförderzeugen und einer zentralen Datenverarbeitungsvorrichtung gemäß einer Ausführungsform;
Figuren 3a-c schematische Darstellungen der von einer Kamera eines herkömmlichen Flurförderzeugs bei der Anfahrt an einen Ladungsträger erfassten und zur Objekterkennung verwendeten Sensordaten in Form von Bilddaten an unterschiedlichen Positionen des Flurförderzeugs;
Figuren 4a-c schematische Darstellungen der von einer Kamera eines erfindungsgemäßen Flurförderzeugs bei der Anfahrt an einen Ladungsträger erfassten und zur Objekterkennung verwendeten Sensordaten in Form von Bilddaten an unterschiedlichen Positionen des Flurförderzeugs; und
Figur 5 ein Flussdiagramm mit Schritten eines Verfahrens zum Betreiben eines Flurförderzeugs zum Transport von Waren in einem Warenlager gemäß einer Ausführungsform.

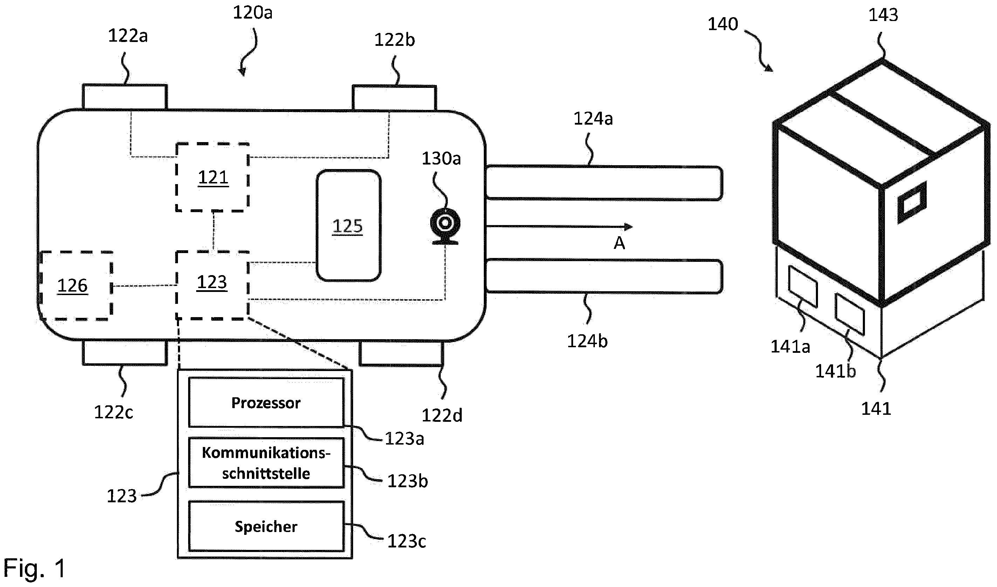

Figur 1 zeigt eine schematische Darstellung eines Flurförderzeugs 120a gemäß einer Ausführungsform zum Transportieren von Waren 140 in einem industriellen Umfeld, insbesondere einem Warenlager. Bei dem Flurförderzeug 120a kann es sich insbesondere um einen zweitweise autonom, teil-autonom und/oder manuell betriebenen, d.h. von einem Bediener geführten Gabelstapler 120a handeln. Bei den Waren 140 kann es sich beispielsweise um Warenobjekte 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141 oder eine Gitterbox 141 handeln.

Wie in Figur 1 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie das darauf angeordnete Warenobjekt 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 1 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, das Flurförderzeug 120a und das Paar von Lastgabeln 124a,b relativ zu der Ware 140 zu bewegen, um beispielsweise die Orientierung und/oder den Abstand zwischen dem Flurförderzeug 120a und der Ware 140, insbesondere dem Ladungsträger 141 zu ändern und/oder das Paar von Lastgabeln 124a,b anzuheben oder abzusenken. Zu diesem Zweck kann, wie in Figur 1 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a kann ferner eine Sensoreinheit 130a, insbesondere eine Bildererfassungseinheit 130a umfassen, welche ausgebildet ist, bei der Bewegung des Transportroboters 120a eine Vielzahl von Sensordaten, insbesondere Bilddaten, z.B. eine Vielzahl von Bildern der Umgebung des Flurförderzeugs 120a zu erfassen. Vorzugsweise umfasst die Sensoreinheit 130a eine Kamera 130a, insbesondere eine 3D-Kamera 130a, beispielsweise eine Stereo-Kamera 130a oder eine Time-of-Flight-Kamera (TOF-Kamera) 130a. Neben oder anstatt einer Bilderfassungseinheit kann die Sensoreinheit 130a einen Lidar-Sensor 130a und/oder einen Radar-Sensor 130a zur Erfassung der Sensordaten mit Informationen über die Umgebung des Flurförderzeugs 120a umfassen.

Wie in Figur 1 angedeutet, ist die Sensoreinheit 130a, insbesondere Bilderfassungseinheit 130a vorzugsweise derart an dem als Flurförderzeug 120a ausgebildeten Transportroboter 120a montiert, dass das Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Sensoreinheit 130a, insbesondere Bilderfassungseinheit 130a mit dem Blickfeld entlang der Vorwärtsbewegungsrichtung A des Flurförderzeugs 120a kann das Flurförderzeug 120a noch weitere Sensoreinheiten, insbesondere Bilderfassungseinheiten umfassen, beispielsweise eine Bilderfassungseinheit mit einem Blickfeld entlang einer Rückwärtsbewegungsrichtung des Flurförderzeugs 120a und/oder eine Bilderfassungseinheit mit einem Blickfeld senkrecht zu der Vorwärtsbewegungsrichtung A des Flurförderzeugs 120a.

Erfindungsgemäß umfasst das Flurförderzeug 120a ferner eine Datenverarbeitungsvorrichtung 123 (hierin auch als Steuereinheit 123 bezeichnet), welche beispielsweise einen oder mehrere Prozessoren oder Mikro-Controller 123a mit geeigneter Software umfassen kann und ausgebildet ist, das Flurförderzeug 120a zumindest teilweise automatisiert zu steuern. Wie in der Figur 1 dargestellt, kann die Datenverarbeitungsvorrichtung bzw. Steuereinheit 123 ferner eine Kommunikationsschnittstelle 123b, insbesondere zum Erhalten der Sensordaten, insbesondere Bilddaten, von der Sensoreinheit 130a, sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Datenverarbeitungsvorrichtung bzw. Steuereinheit 123 ausgeführt, den Prozessor 123a veranlasst, die im Folgenden beschriebenen Funktionen, Operationen und Verfahren durchzuführen.

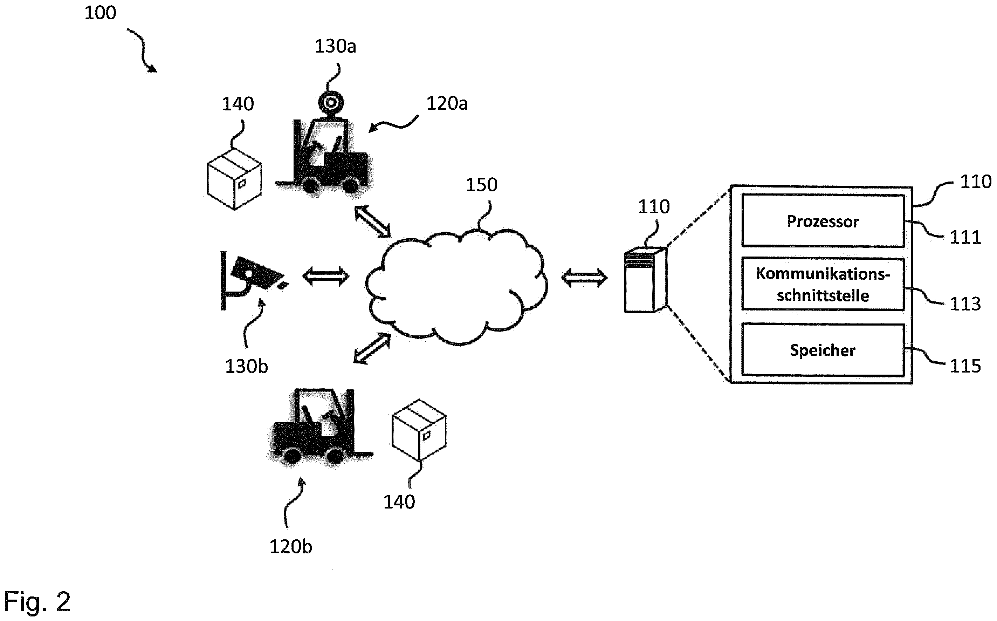

Figur 2 zeigt eine schematische Darstellung eines erfindungsgemäßen Systems 100 zum Betreiben des Flurförderzeugs 120a sowie einem oder mehreren weiterer Flurförderzeuge 120b, welche jeweils zeitweise automatisiert, teilautomatisiert und/oder manuell betreibbar sind, um Transportaufträge zum Transport von Waren 140 in dem Warenlager durchzuführen.

Das System 100 umfasst neben der Vielzahl von Flurförderzeugen 120a,b eine zentrale Datenverarbeitungsvorrichtung 110, beispielsweise einen Server 110, welche ausgebildet ist, mit jedem Flurförderzeug 120a,b der Vielzahl von Flurförderzeugen 120a,b zu kommunizieren, um beispielsweise jedem der Vielzahl von Flurförderzeugen 120a,b Transportaufträge zum Transport der Waren 140 in dem Warenlager zuzuteilen. Hierzu umfasst beispielsweise das Flurförderzeug 120a eine Kommunikationsschnittstelle 126, welche ausgebildet ist, mit einer entsprechenden Kommunikationsschnittstelle 113 der zentralen Datenverarbeitungsvorrichtung 110, zu kommunizieren, beispielsweise über ein drahtloses Kommunikationsnetzwerk 150, z.B. ein Wi-Fi-Netzwerk oder ein Mobilfunknetzwerk. Über ein solches drahtloses Kommunikationsnetzwerk 150 kann das Flurförderzeug 120a und/oder die zentrale Datenverarbeitungsvorrichtung 110 ferner mit einer weiteren externen Sensoreinheit 130b kommunizieren, wie beispielsweise einer in einem Gang des Warenlagers angebrachten Kamera 130b. Bei der in Figur 2 dargestellten zentralen Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 2 dargestellt, kann die zentrale Datenverarbeitungsvorrichtung 110 neben der bereits erwähnten Kommunikationsschnittstelle 113, einen oder mehrere Prozessoren 111 und einen, insbesondere nichtflüchtigen, Speicher 115 aufweisen. Der Speicher 115 kann ausgebildet sein, Daten und ausführbaren Programmcode zu speichern, der, wenn von dem Prozessor 111 der zentralen Datenverarbeitungsvorrichtung 110 ausgeführt, den Prozessor 111 veranlasst, die im Folgenden beschriebenen Funktionen, Operationen und Verfahren durchzuführen.

Erfindungsgemäß wird eine Datenverarbeitungsvorrichtung zum Betreiben des Flurförderzeugs 120a zum Transport eines Ladungsträgers 141 in einem Warenlager bereitgestellt. Wie dies nachstehend im Detail beschrieben wird, kann die erfindungsgemäße Datenverarbeitungsvorrichtung in Form der Steuereinheit 123 des Flurförderzeugs 120a ausgebildet sein oder als die zentrale Datenverarbeitungsvorrichtung 110 zum Betreiben der Vielzahl von Flurförderzeugen 120a,b in dem Warenlager ausgebildet sein.

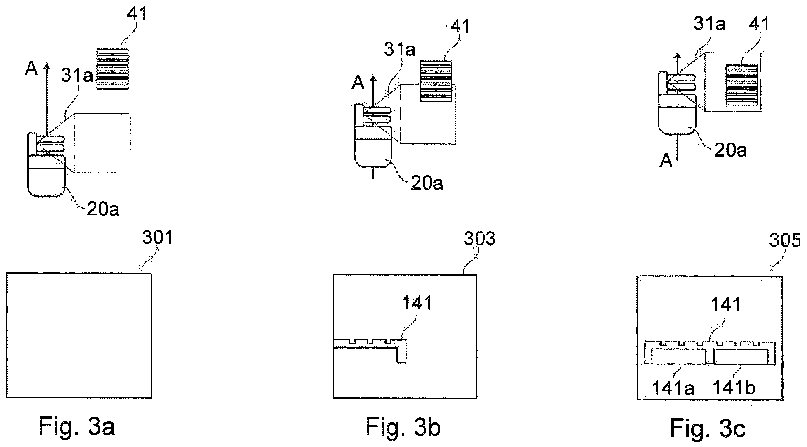

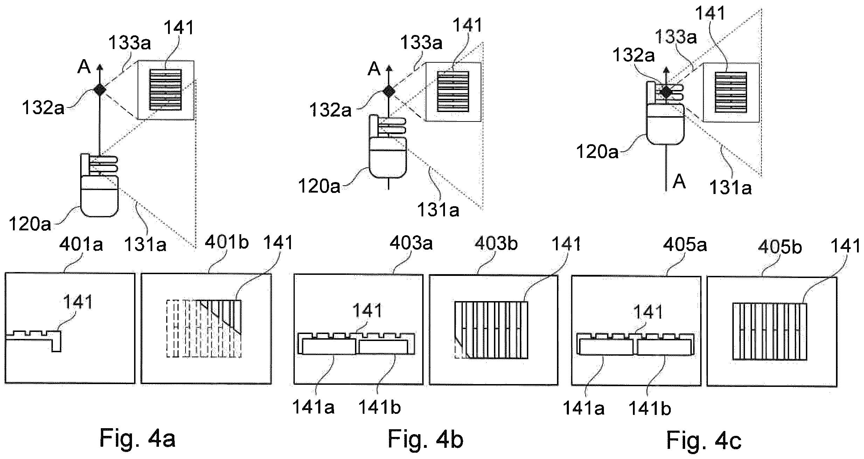

Nachstehend wird unter weiterer Bezugnahme auf die Figuren 3a-c und 4a-c im Detail eine erfindungsgemäße Ausführungsform der als Steuereinheit 123 des Flurförderzeugs 120a ausgebildeten Datenverarbeitungsvorrichtung beschrieben. Wie jedoch bereits vorstehend erwähnt und wie der Fachmann erkennen wird, kann die im Folgenden beschriebene Funktionalität der Steuereinheit 123 des Flurförderzeugs 120a alternativ oder zusätzlich teilweise oder vollständig durch die zentrale Datenverarbeitungsvorrichtung 110 zum Betreiben der Vielzahl von Flurförderzeugen 120a,b in dem Warenlager implementiert werden. Die Figuren 3a-c zeigen schematische Darstellungen der von einer Kamera eines herkömmlichen Flurförderzeugs 20a innerhalb eines Blickfelds 31a der Kamera bei der Anfahrt an einen Ladungsträger 41 erfassten und zur Objekterkennung verwendeten Sensordaten in Form von Bilddaten 301, 303, 305 an unterschiedlichen Positionen des Flurförderzeugs 20a. Die Figuren 4a-c zeigen schematische Darstellungen der von der Kamera 130a des erfindungsgemäßen Flurförderzeugs 120a bei der Anfahrt an einen Ladungsträger 141 innerhalb eines Blickfeldes 131a der Kamera 130a erfassten und zur Objekterkennung verwendeten Sensordaten in Form von Bilddaten an unterschiedlichen Positionen des Flurförderzeugs 120a.

Über die Schnittstelle 123b ist die als Steuereinheit 123 ausgebildete Datenverarbeitungsvorrichtung 123 des Flurförderzeugs 120a ausgebildet, eine Vielzahl von Sensordaten, insbesondere Bilddaten, d.h. Bildern des Ladungsträgers bei der Bewegung des Flurförderzeugs 120a relativ zu dem Ladungsträger 141, d.h. aus unterschiedlichen Positionen des Flurförderzeugs 120a relativ zu dem Ladungsträger 141 zu erhalten bzw. zu empfangen.

Die Prozessoreinrichtung 123a der als Steuereinheit 123 ausgebildeten Datenverarbeitungsvorrichtung 123 des Flurförderzeugs 120a ist ausgebildet, auf der Grundlage der Vielzahl von Sensordaten in Form von Bildern eine mehrdimensionale, insbesondere dreidimensionale probabilistische Belegungskarte (im Englischen als "probabilistic occupancy map" oder "probabilisitic occupancy grid" bekannt) einer Umgebung des Flurförderzeugs 120a bzw. des Ladungsträgers 141 zu generieren und/oder zu aktualisieren. Dabei umfasst die mehrdimensionale, insbesondere dreidimensionale probabilistische Belegungskarte eine Vielzahl von mehrdimensionalen, insbesondere dreidimensionalen Zellen, wobei jede mehrdimensionale, insbesondere dreidimensionale Zelle mit einer Belegungswahrscheinlichkeit verknüpft ist, welche die Wahrscheinlichkeit angibt, mit der die entsprechende Zelle der Belegungskarte durch irgendein Objekt belegt ist. In den Figuren 4a-c sind jeweils Ausschnitte 401b, 403b, 405b der mehrdimensionalen probabilistischen Belegungskarte schematisch dargestellt. In einer Ausführungsform können hierzu Positionsdaten des Flurförderzeugs 120a verwendet werden, um die Vielzahl von Bildern, die beispielsweise auf einem 3D-Scan basieren können, in das statische Referenzkoordinatensystem der dreidimensionalen probabilistischen Belegungskarte zu transformieren. Die Positionsdaten des Flurförderzeugs können genaue GPS-Daten sein oder mittels einer Lokalisierungseinrichtung des Flurförderzeugs bestimmt werden, wobei die Lokalisierungseinrichtung beispielsweise eine relative Lokalisierung des Flurförderzeugs, beispielswese mittels Odometrie, oder eine globale Lokalisierung des Flurförderzeugs, beispielsweise mittels Landmarkern, umfassen kann. Zusätzlich zu den Positionsdaten des Flurförderzeugs 120a können weitere Sensordaten, welche die momentane Höhe der Lastgabeln 124a,b widerspiegeln, in die Generierung der mehrdimensionalen probabilistischen Belegungskarte, beispielsweise der in den Figuren 4a-c gezeigten Abschnitte 401b, 403b, 405b der mehrdimensionalen probabilistischen Belegungskarte mit einfließen. Wie bereits vorstehend beschrieben, kann die mehrdimensionale probabilistische Belegungskarte eine dreidimensionale Belegungskarte sein, wobei die drei Dimensionen den drei Raumdimensionen entsprechen. Bei einer zweidimensionalen probabilistischen Belegungskarte können die zwei Dimensionen zwei Raumdimensionen in der horizontalen Ebene entsprechen. Bei höher dimensionalen probabilistischen Belegungskarte können neben den Raumdimensionen eine oder mehrere weitere Dimensionen abgebildet werden, die z.B. einen Intensitätswert, einen Farbwert, und/oder einen Belegungszeitpunkt einer entsprechenden Zelle der Belegungskarte abbilden.

In einer Ausführungsform ist die Prozessoreinrichtung 123a der Steuereinheit 123 des Flurförderzeugs 120a ausgebildet, auf der Grundlage der Vielzahl von Sensordaten, insbesondere Bildern die mehrdimensionale, insbesondere dreidimensionale probabilistische Belegungskarte der Umgebung des Flurförderzeugs 120a bzw. des Ladungsträgers 141 zu generieren und/oder zu aktualisieren, indem auf der Grundlage der Vielzahl von Sensordaten, insbesondere Bildern die Belegungswahrscheinlichkeit wenigstens einer Zelle der Vielzahl von Zellen der mehrdimensionalen, insbesondere dreidimensionalen probabilistischen Belegungskarte bestimmt und/oder geändert wird. Mit anderen Worten: wenn die Belegungskarte auf der Grundlage von neu erfassten Sensordaten, insbesondere Bilddaten aktualisiert wird, kann sich die Belegungswahrscheinlichkeit einer Zelle erhöhen, erniedrigen oder gleich bleiben, was insbesondere bei der Erfassung von dynamischen Objekten in der Belegungskarte vorteilhaft ist. Der negative Einfluss von Rauschen und Falschmessungen kann eingeschränkt werden, da ein Belegungszustand einer jeweiligen Zelle der Belegungskarte durch die dazugehörige Belegungswahrscheinlichkeit bestimmt sein kann.

In einer Ausführungsform ist die als Steuereinheit 123 ausgebildete Datenverarbeitungsvorrichtung 123 des Flurförderzeugs 120a ausgebildet, die generierte bzw. aktualisierte Belegungskarte mit weiteren Flurförderzeugen, beispielsweise dem Flurförderzeug 120b und/oder der zentralen Servervorrichtung 110 zu teilen, um die Belegungskarte allen Flurförderzeugen zur Verfügung zu stellen. Hierdurch kann das Warenlager sowie die Objekte darin zu unterschiedlichen Zeitpunkten und/oder unter unterschiedlichen Blickwinkeln erfasst werden, was die Detektion von Objekten in Bereichen des Warenlagers ermöglicht, die ein Flurförderzeug 120a noch gar nicht erreicht hat.

Die Prozessoreinrichtung 123a der als Steuereinheit 123 ausgebildeten Datenverarbeitungsvorrichtung 123 des Flurförderzeugs 120a ist ferner ausgebildet, auf der Grundlage der mehrdimensionalen, insbesondere dreidimensionalen probabilistischen Belegungskarte der Umgebung des Flurförderzeugs 120a bzw. des Ladungsträgers 141 wenigstens eine zweidimensionale Ansicht 401a, 403a, 405a, d.h. ein zweidimensionales Bild 401a, 403a, 405a des Ladungsträgers 141 zu erstellen und mittels eines Objekterkennungsmechanismus auf der Grundlage der wenigstens einen zweidimensionalen Ansicht des Ladungsträgers 141 den Ladungsträger 141 zu erkennen und Steuersignale für das Flurförderzeug 120a zu erzeugen, um das Flurförderzeug 120a relativ zu dem erkannten Ladungsträger 141 zu bewegen und den erkannten Ladungsträger 141 aufzunehmen, indem beispielsweise die Lastgabeln 124a,b in die Taschen 141a,b des Ladungsträgers geeignet eingebracht werden. In den Figuren 4a-c sind schematisch drei beispielhafte von der Prozessoreinrichtung 123a der Steuereinheit 123 generierte zweidimensionale Ansichten bzw. Bilder 401a, 403a, 405a des Ladungsträgers 141 zusammen mit den entsprechenden Abschnitten 401b, 403b, 405b der dreidimensionalen probabilistischen Belegungskarte schematisch dargestellt.

In einer Ausführungsform ist die Prozessoreinrichtung 123a der Steuereinheit 123 ausgebildet, wie in den Figuren 4a-c durch das virtuelle Blickfeld 133a illustriert, auf der Grundlage der mehrdimensionalen probabilistischen Belegungskarte der Umgebung des Flurförderzeugs 120a bzw. des Ladungsträgers die wenigstens eine zweidimensionale Ansicht des Ladungsträgers 141 relativ zu einer virtuellen Sensorposition 132a, d.h. relativ zu einem vordefinierten Referenzpunkt 132a zu erstellen, der in den Figuren 4a-c dargestellt ist. In einer Ausführungsform kann die Prozessoreinrichtung 123a der Steuereinheit 123 ausgebildet sein, hierfür einen Strahlverfolgungsmechanismus, insbesondere einen Raytracing-Algorithmus einzusetzen.

Gemäß einer Ausführungsform kann der Objekterkennungsmechanismus ein künstliches neuronales Netzwerk zur Objekterkennung umfassen, welches ausgebildet ist, auf der Grundlage der wenigstens einen zweidimensionalen Ansicht des Ladungsträgers 141 den Ladungsträger 141 zu erkennen.

Wie der Fachmann erkennt, basieren die hierin beschriebenen erfindungsgemäßen Ausführungsformen auf dem Grundgedanken, eine weitere Verarbeitungsschicht oder Zwischenschicht zwischen der Objekterfassung und der Objekterkennung vorzusehen. Hierzu können Positionsdaten des Flurförderzeugs 120a verwendet werden, um einen 3D-Scan in ein statisches Referenzkoordinatensystem der Belegungskarte zu transformieren. In diesem Referenzkoordinatensystem kann eine "Region-of-Interest" (ROI) definiert werden, die einen Bereich um das erfasste und zu erkennende Objekt, beispielsweise den Ladungsträger 141, beschreibt. Falls sich ein erfasster Punkt des 3D-Scans innerhalb des ROI-Bereichs des Referenzkoordinatensystems befindet, wird dieser Punkt für die probabilistische Belegungskarte verwendet, wie dies vorstehend im Detail beschrieben worden ist. Auf diese Art und Weise kann eine 3D-Darstellung des erfassten und zu erkennenden Objekts, beispielsweise des Ladungsträgers 141, generiert werden, wobei irrelevante Umgebungsinformationen außerhalb des ROI-Bereichs weggelassen werden können.

Wie der Fachmann erkennt, indem Positionsinformationen des Flurförderzeugs 120a verwendet werden und die Sensordaten, insbesondere Bilddaten, d.h. die Vielzahl von Bildern in das Referenzkoordinatensystem der mehrdimensionalen, insbesondere dreidimensionalen probabilistischen Belegungskarte transformiert werden, wie dies in Ausführungsformen so implementiert ist, kann die Erkennung des Ladungsträgers 141 von der aktuellen Position des Flurförderzeugs 120a entkoppelt werden. Die Belegungskarte des beobachteten Bereichs 401b, 403b, 405b kann während der Anfahrt des Flurförderzeugs 120a in Richtung des Ladungsträgers 141 fortlaufend generiert werden und der Objekterkennungsmechanismus kann auf die auf der Grundlage der Belegungskarte erzeugten Ansichten 401a, 403a, 405a angewendet werden. Dies ermöglicht ein schnelleres Erkennen des Ladungsträgers bereits während der Anfahrt und somit beispielsweise eine optimierte Pfadplanung, die auf einer suboptimalen Objektpositionierung basieren kann. Indem der Pfad des Flurförderzeugs 120a somit während der Anfahrt korrigiert werden kann, lässt sich Zeit einsparen, die bei einem herkömmlichen Flurförderzeug 20a dafür verwendet worden wäre, um die Position des Flurförderzeugs 20a nach der Anfahrt zu korrigieren. Die Anfahrt des Flurförderzeugs 120a in Richtung des Ladungsträgers 141 kann auf einer beliebigen Trajektorie, d.h. einer geradlinigen oder einer gekrümmten Trajektorie, erfolgen.

Indem die Belegungskarte während der Anfahrt des Flurförderzeugs 120a fortlaufend erzeugt und/oder aktualisiert werden kann, können gemäß den hierin beschriebenen Ausführungsformen mehr Informationen des zu erkennenden Objekts berücksichtigt werden, wodurch der Effekt von falschen oder invaliden Messungen kompensiert werden kann. Dies führt zu einer robusteren, d.h. weniger fehleranfälligen Detektion und Erkennung von Objekten.

Bei den hierin beschriebenen Ausführungsformen haben Reflektionen oder schlechte Lichtverhältnisse bei einem Blickwinkel einen verminderten nachteiligen Einfluss, da der Ladungsträger 141 während der Anfahrt aus einer Vielzahl von unterschiedlichen Blickwinkeln betrachtet werden kann, welche in die Belegungskarte mit einfließen.

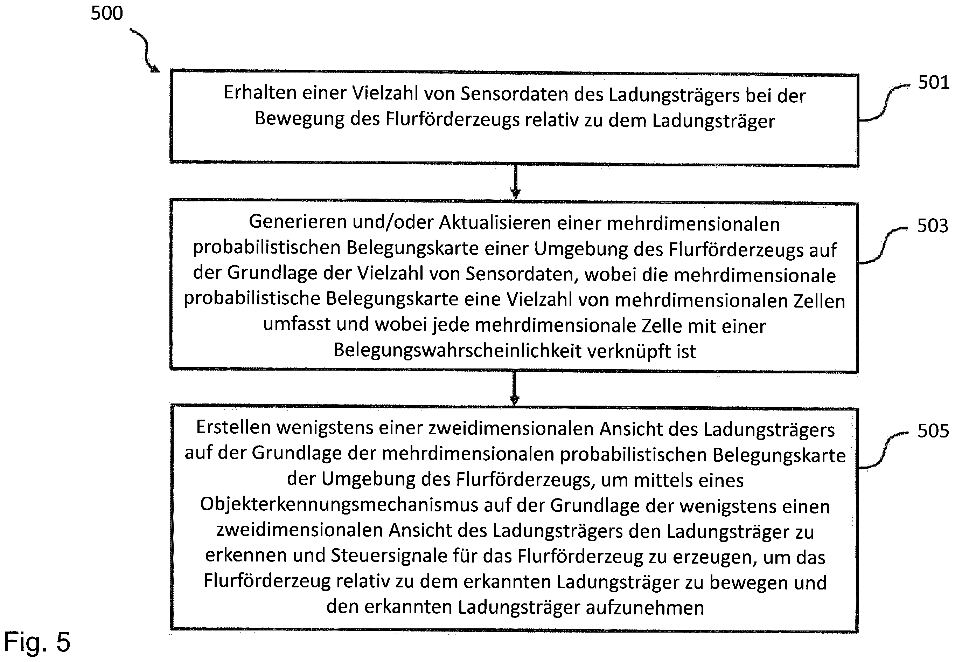

Figur 5 zeigt ein Flussdiagramm mit Schritten eines Verfahrens 500 zum Betreiben eines Flurförderzeugs 120a zum Transport eines Ladungsträgers 141 in einem Warenlager. Das Verfahren 500 umfasst das Erhalten bzw. Empfangen 501 einer Vielzahl von Sensordaten, insbesondere Bilddaten, des Ladungsträgers 141 bei der Bewegung des Flurförderzeugs 120a relativ zu dem Ladungsträger 141. Ferner umfasst das Verfahren das Generieren und/oder Aktualisieren 503 einer mehrdimensionalen, insbesondere dreidimensionalen, probabilistischen Belegungskarte einer Umgebung des Flurförderzeugs 120a bzw. Ladungsträgers 141 auf der Grundlage der Vielzahl von Sensordaten, insbesondere Bilddaten. Wie bereits vorstehend im Detail beschrieben, umfasst die mehrdimensionale, insbesondere dreidimensionale, probabilistische Belegungskarte eine Vielzahl von mehrdimensionalen, insbesondere dreidimensionalen Zellen, wobei jede mehrdimensionale, insbesondere dreidimensionale, Zelle mit einer Belegungswahrscheinlichkeit verknüpft ist. Das Verfahren 500 umfasst ferner das Erstellen 505 wenigstens einer zweidimensionalen Ansicht 401a, 403a, 405a des Ladungsträgers 141 auf der Grundlage der mehrdimensionalen, insbesondere dreidimensionalen probabilistischen Belegungskarte, um mittels eines Objekterkennungsmechanismus auf der Grundlage der wenigstens einen zweidimensionalen Ansicht 401a, 403a, 405a des Ladungsträgers 141 den Ladungsträger 141 zu erkennen und Steuersignale für das Flurförderzeug 120a zu erzeugen, um das Flurförderzeug 120a relativ zu dem erkannten Ladungsträger 141 zu bewegen und den erkannten Ladungsträger 141 aufzunehmen.

Das erfindungsgemäße Verfahren 500 kann mittels der erfindungsgemäßen Datenverarbeitungsvorrichtung 123; 110 durchgeführt werden. Daher ergeben sich weitere Ausführungsformen des erfindungsgemäßen Verfahrens 500 aus den vorstehend und nachstehend beschriebenen Ausführungsformen der erfindungsgemäßen Datenverarbeitungsvorrichtung 123; 110.

## Patentansprüche

1. Datenverarbeitungsvorrichtung (123; 110) zum Betreiben eines Flurförderzeugs (120a) zum Transport eines Ladungsträgers (141) in einem Warenlager, wobei die Datenverarbeitungsvorrichtung (123; 110) umfasst:
eine Schnittstelle (123b; 113), welche ausgebildet ist, eine Vielzahl von Sensordaten, insbesondere Bilddaten, des Ladungsträgers (141) bei der Bewegung des Flurförderzeugs (120a) relativ zu dem Ladungsträger (141) zu erhalten; und
eine Prozessoreinrichtung (123a; 111), welche ausgebildet ist, auf der Grundlage der Vielzahl von Sensordaten, insbesondere Bilddaten, eine mehrdimensionale, insbesondere dreidimensionale, probabilistische Belegungskarte einer Umgebung des Flurförderzeugs (120a) zu generieren und/oder zu aktualisieren, wobei die mehrdimensionale, insbesondere dreidimensionale, probabilistische Belegungskarte eine Vielzahl von mehrdimensionalen, insbesondere dreidimensionalen, Zellen umfasst und wobei jede mehrdimensionale, insbesondere dreidimensionale, Zelle mit einer Belegungswahrscheinlichkeit verknüpft ist,
wobei die Prozessoreinrichtung (123a; 111) ferner ausgebildet ist, auf der Grundlage der mehrdimensionalen, insbesondere dreidimensionalen, probabilistischen Belegungskarte der Umgebung des Flurförderzeugs (120a) wenigstens eine zweidimensionale Ansicht (401a, 403a, 405a) des Ladungsträgers (141) zu erstellen und mittels eines Objekterkennungsmechanismus auf der Grundlage der wenigstens einen zweidimensionalen Ansicht (401a, 403a, 405a) des Ladungsträgers (141) den Ladungsträger (141) zu erkennen und Steuersignale für das Flurförderzeug (120a) zu erzeugen, um das Flurförderzeug (120a) relativ zu dem erkannten Ladungsträger (141) zu bewegen und den erkannten Ladungsträger (141) aufzunehmen.

2. Datenverarbeitungsvorrichtung (123; 110) nach Anspruch 1, wobei die Prozessoreinrichtung (123a; 111) ausgebildet ist, auf der Grundlage der mehrdimensionalen, insbesondere dreidimensionalen, probabilistischen Belegungskarte der Umgebung des Flurförderzeugs (120a) die wenigstens eine zweidimensionale Ansicht (401a, 403a, 405a) des Ladungsträgers (141) relativ zu einer virtuellen Sensorposition (132a) zu erstellen.

3. Datenverarbeitungsvorrichtung (123; 110) nach Anspruch 1 oder 2, wobei der Objekterkennungsmechanismus ein künstliches neuronales Netzwerk umfasst, welches ausgebildet ist, auf der Grundlage der wenigstens einen zweidimensionalen Ansicht (401a, 403a, 405a) des Ladungsträgers (141) den Ladungsträger (141) zu erkennen.

4. Datenverarbeitungsvorrichtung (123; 110) nach einem der vorhergehenden Ansprüche, wobei die Prozessoreinrichtung (123a; 111) ausgebildet ist, auf der Grundlage der Vielzahl von Sensordaten, insbesondere Bilddaten, die mehrdimensionale, insbesondere dreidimensionale, probabilistische Belegungskarte der Umgebung des Flurförderzeugs (120a) zu generieren und/oder zu aktualisieren, indem auf der Grundlage der Vielzahl von Sensordaten, insbesondere Bilddaten, die Belegungswahrscheinlichkeit wenigstens einer Zelle der Vielzahl von mehrdimensionalen, insbesondere dreidimensionalen, Zellen bestimmt und/oder geändert wird.

5. Flurförderzeug (120a), insbesondere Gabelstapler (120a), zum Transport eines Ladungsträgers (141) in einem Warenlager, wobei das Flurförderzeug (120a) eine Datenverarbeitungsvorrichtung (123) nach einem der vorhergehenden Ansprüche umfasst.

6. Flurförderzeug (120a) nach Anspruch 5, wobei das Flurförderzeug (120a) ferner Antriebsmittel (121, 122a-d) umfasst, wobei die Antriebsmittel (121, 122a-d) ausgebildet sind, das Flurförderzeug (120a) auf der Grundlage der Steuersignale relativ zu dem Ladungsträger (141) zu bewegen.

7. Flurförderzeug (120a) nach Anspruch 5 oder 6, wobei das Flurförderzeug (120a) ferner Lastaufnahmemittel (124a,b), insbesondere Lastgabeln (124a,b), umfasst, wobei die Lastaufnahmemittel (124a,b), insbesondere Lastgabeln (124a,b), ausgebildet sind, auf der Grundlage der Steuersignale relativ zu dem Ladungsträger (141) bewegt zu werden, um den Ladungsträger (141) aufzunehmen.

8. Flurförderzeug (120a) nach einem der Ansprüche 5 bis 7, wobei das Flurförderzeug (120a) ferner eine Sensoreinheit 130a, insbesondere eine Bilderfassungseinheit 130a, umfasst, wobei die Sensoreinheit 130a, insbesondere die Bilderfassungseinheit 130a, ausgebildet ist, die Vielzahl von Sensordate, insbesondere Bilddaten, des Ladungsträgers (141) bei der Bewegung des Flurförderzeugs (120a) relativ zu dem Ladungsträger (141) zu erfassen und der Schnittstelle (123b) der Datenverarbeitungsvorrichtung (123) bereitzustellen.

9. System (100) zum Betreiben einer Vielzahl von Flurförderzeugen (120a,b) in einem Warenlager, wobei das System (100) umfasst:
eine Vielzahl von Flurförderzeugen (120a,b) nach einem der Ansprüche 5 bis 8; und
eine Datenverarbeitungsvorrichtung (110) nach einem der Ansprüche 1 bis 4 zum Betreiben der Vielzahl von Flurförderzeugen (120a,b) in dem Warenlager.

10. Verfahren (500) zum Betreiben eines Flurförderzeugs (120a) zum Transport eines Ladungsträgers (141) in einem Warenlager, wobei das Verfahren (500) umfasst:
Erhalten (501) einer Vielzahl von Sensordaten, insbesondere Bilddaten, des Ladungsträgers (141) bei der Bewegung des Flurförderzeugs (120a) relativ zu dem Ladungsträger (141);
Generieren und/oder Aktualisieren (503) einer mehrdimensionalen, insbesondere dreidimensionalen, probabilistischen Belegungskarte einer Umgebung des Flurförderzeugs (120a) auf der Grundlage der Vielzahl von Sensordaten, insbesondere Bilddaten, wobei die mehrdimensionale, insbesondere dreidimensionale, probabilistische Belegungskarte eine Vielzahl von mehrdimensionalen, insbesondere dreidimensionalen, Zellen umfasst und wobei jede mehrdimensionale, insbesondere dreidimensionale, Zelle mit einer Belegungswahrscheinlichkeit verknüpft ist;
Erstellen (505) wenigstens einer zweidimensionalen Ansicht (401a, 403a, 405a) des Ladungsträgers (141) auf der Grundlage der mehrdimensionalen, insbesondere dreidimensionalen, probabilistischen Belegungskarte der Umgebung des Flurförderzeugs (120a), um mittels eines Objekterkennungsmechanismus auf der Grundlage der wenigstens einen zweidimensionalen Ansicht (401a, 403a, 405a) des Ladungsträgers (141) den Ladungsträger (141) zu erkennen und Steuersignale für das Flurförderzeug (120a) zu erzeugen, um das Flurförderzeug (120a) relativ zu dem erkannten Ladungsträger (141) zu bewegen und den erkannten Ladungsträger (141) aufzunehmen.
